# EUROPEAN PATENT APPLICATION

(11) **EP 3 604 079 A1**
(43) Date of publication of application: **05.02.2020**
(21) Application number: 18187029.6
(22) Date of filing: 02.08.2018
(51) Int. Cl.: B62B 3/02, B62B 3/12

(54) **FOLDABLE GOLF TROLLEY**

(71) Applicant: Hild & Sons GmbH, 63533 Mainhausen (DE)
(72) Inventor: Hild, Horst, 63533 Mainhausen (DE); Hild, Sven, 64500 Seligenstadt (DE); Hild, Nils, 63533 Mainhausen (DE)
(74) Representative: Keil & Schaafhausen Patent- und Rechtsanwälte PartGmbB

(57) **Abstract**

The invention is directed to a golf trolley (1) comprising a main frame (2) for mounting a golf bag, a handle portion (3), which is pivotably attached to the main frame (2) at a handle joint (4), a first main wheel (6) attached to a first main wheel mount (7), wherein the first main wheel mount (7) is pivotably attached to the main frame (2), pivotable about a swivel axis (8). For easy folding and unfolding of the golf trolley (1), the first main wheel mount (7) is displaceable parallel to the swivel axis (8), wherein the handle portion (3) is mechanically coupled to the first main wheel mount (7) such that folding the handle portion (3) at the handle joint (4) drives the first main wheel mount (7) to rotate about the swivel axis (8) and to move linearly along the swivel axis (8).

## Description

The invention is concerned with a golf trolley for mounting a golf bag. The golf trolley is foldable between an operational mode in which the golf trolley can be used to hold a golf bag with golf clubs and a transport mode in which the golf trolley is folded-up for transportation, for example in the trunk of a vehicle or during a flight. The golf trolley comprises a main frame, a handle portion, which is pivotably attached to the main frame at a handle joint, pivotable about a handle joint axis between an extended handle position for the operational mode and a transport handle position for the transport mode. A first wheel is attached to a first wheel mount, wherein the first wheel mount is pivotably attached to the main frame, pivotable about a swivel axis between an extended angle for the operational mode and a transport angle for the transport mode.

Golf trolleys are widely used to transport golf bags filled with golf clubs, which can be mounted on or to the golf trolley. A golf trolley typically has two or three wheels and can be pushed in front of or pulled behind a golf player. Since golf trolleys are rather large and bulky, trolleys are known that can be folded up in order to transport the trolley. Therefore, some parts, like the handle or a main wheel mount, can be folded in order to reduce the amount of space necessary for the golf trolley.

This has the disadvantage, that the trolley has to be set up every time before the use of the golf trolley, which can be very time consuming. It is thus an object of the present invention to provide a foldable golf trolley with an easy and fast way to set up the golf trolley.

This object is solved with a golf trolley according to claim 1. The golf trolley comprises a main frame for mounting a golf bag, a handle portion, which is pivotably attached to the main frame at a handle joint, pivotable about a handle joint axis between an extended handle position and a transport handle position, a first main wheel attached to a first main wheel mount, wherein the first main wheel mount is pivotably attached to the main frame, pivotable about a swivel axis between an extended angle and a transport angle. The first main wheel mount is displaceable parallel to the swivel axis between an extended position and a transport position, wherein the handle portion is mechanically coupled to the first main wheel mount such that folding the handle portion at the handle joint into its extended handle position drives the first main wheel mount to rotate about the swivel axis into its extended angle and to move linearly along the swivel axis into its extended position. Hence, the inventive golf trolley can be set-up to its operational mode with a single and simple action, saving a lot of time compared to the many steps necessary in known foldable golf trolleys.

In a preferred embodiment, the inventive golf trolley comprises a second main wheel attached to a second main wheel mount, wherein the second main wheel mount is pivotable about a swivel axis between an extended angle and a transport angle. The second main wheel mount is further displaceable parallel to the swivel axis between an extended position and a transport position. Hence, the second main wheel mount is pivotably and displaceably attached to the main frame and is further mechanically coupled to the handle portion, such that folding the handle portion at the handle joint drives the second main wheel mount to rotate together with the first main wheel mount and to move linearly along the swivel axis, wherein the first main wheel mount and the second main wheel mount move in opposite directions. Thereby, both wheel mounts are easily moved and the golf trolley can be even smaller in its transport mode and at the same time have a large enough track width in its operational mode that ensures safe handling of the golf trolley on the golf course without the risk of tipping over.

In another preferred embodiment of the inventive golf trolley, the first main wheel mount and/or the second main wheel mount is attached to the main frame via a telescopic rod, wherein the telescopic rod can rotate about the swivel axis and axially move along the swivel axis with respect to the main frame. The telescopic rod can be aligned such that its center axis corresponds to the swivel axis. Such a telescopic rod serves as a connection between the main wheel mount and the main frame that provides the necessary degree of freedom of movement and provides a sturdy connection. So even after excessive use of the golf trolley and particularly after many transitions between the transport mode and the operational mode, the proper function of the golf trolley can be ensured. Furthermore, the mounting by the telescopic rod provides a very high torsional stiffness to the golf trolley.

In a more preferred embodiment of the golf trolley, the telescopic rod comprises an inner tube and an outer tube, wherein the inner tube is slidably arranged in the outer tube and wherein the inner tube is connected to a first main wheel mount and the outer tube is connected to the second main wheel mount or the other way round. The telescopic rod therefore provides a movable and rotational mounting for both main wheels.

In another more preferred embodiment of the golf trolley, the telescopic rod is mechanically coupled to the handle portion via a sliding block guide, wherein the telescopic rod is rotational to the sliding block guide about the swivel axis and axially constrained to the sliding block guide. The sliding block guide can comprise a groove which runs basically along a circular arc at a constant radial distance to the swivel axis. The telescopic rod can have a corresponding protrusion or bolt that engages the groove of the sliding block guide. Hence, the sliding block guide and the telescopic rod are coupled in a way that allows relative rotation between the two parts and allows transmitting a force between the two parts in a direction perpendicular to the groove of the sliding block guide.

In an even more preferred embodiment, the golf trolley comprises two sliding block guides. A first sliding block guide is connected to the inner tube and a second sliding block guide is connected to the outer tube and the two sliding block guides are coupled via a toothed wheel between two gear racks. The toothed wheel can be rotationally mounted to the main frame. Hence, the inner tube and outer tube move antiparallel, wherein their center does not move with respect to the main frame. Hence, the telescopic rod, the main wheel mounts and thus the main wheels move symmetrically and the golf trolley stays balanced in every position.

In another preferred embodiment of the golf trolley, the telescopic rod is mechanically coupled to the handle portion via a carrier element, wherein the telescopic rod is rotationally constrained to the carrier element about the swivel axis and axially movable along the swivel axis with respect to the carrier element. The carrier element can preferably be a carrier tube that can be arranged around the inner tube and the outer tube of the telescopic rod. It provides an easy way for rotationally driving the telescopic rod without axially constraining the telescopic rod to the main frame.

In another preferred embodiment of the golf trolley, the handle portion is mechanically coupled to the first main wheel mount and/or the second main wheel mount via a rotatable shaft. A rotatable shaft provides an easy and durable way to transmit the force applied from a user to the handle portion in an upper part of the golf trolley to the mechanics for the wheels in a lower part of the golf trolley.

In a more preferred embodiment of the golf trolley, the shaft is coupled to the sliding block guide by a linear drive lever mechanism, for transforming a rotation of the shaft to a linear movement of the sliding block guide. A lever mechanism is easy to produce, very sturdy and provides the necessary leverage to move the main wheel mounts.

In another more preferred embodiment of the golf trolley, the shaft is coupled to the carrier element by a rotational drive lever mechanism with a first lever and a second lever, wherein the first lever and the second lever are basically parallel, when the golf trolley is in an operational mode. Hence, when a rotational force is applied to the main wheel mounts, what is typically the case when the golf trolley is moved over the golf court, this force is not transmitted to the shaft. Therefore, the golf trolley does not accidently transform into the transport mode, when it is moved over uneven surfaces.

In another preferred embodiment, the golf trolley comprises a movable locking device for engaging the handle portion and/or the shaft to prevent folding of the handle portion and/or rotating of the shaft. When the golf trolley is moved on a golf court, it is handled by a user at the handle portion. The locking device can prevent the user from accidently folding the golf trolley at the handle joint and thereby transforming the golf trolley into the transport mode. Preferably, the golf trolley comprises a first locking device that engages the handle portion and a second locking device that engages the shaft, wherein the first locking device and the second locking device move together. Thus, the forces acting on the locking devices, when the golf trolley is handled, are divided on two separate elements. Since the forces acting on a single locking device are thus smaller, the stability of the device is increased.

In another preferred embodiment of the golf trolley, the first main wheel and/or the second main wheel is pivotably attached to the main wheel mount and comprises a first lock position on a first side of the main wheel mount and a second lock position on a second side of the main wheel mount. The main wheel can be locked in the first lock position at a first angle and in a second lock position at a second angle, wherein the first angle and the second angle differ by basically 180°. Through the different wheel positions, the track width of the golf trolley can additionally be adjusted. With a wheel position that results in a wide track width, the golf trolley can be handled off-road on extreme uneven surfaces. For the transport mode, the wheels can be rotated in a position with an even smaller track width, further reducing the space required for the golf trolley in the transport mode.

In another preferred embodiment, the golf trolley comprises a support wheel, releasably mounted to the main frame by a support wheel mount, wherein the support wheel mount comprises a key feature for engaging a recess of the main frame through an opening, wherein the key feature fits through the opening in a first orientation and does not fit through the opening in a second orientation. With a support wheel, the golf trolley can be handled more easily. Through the releasable engagement of the support wheel, the golf trolley can for example be modified from a two-wheeled golf trolley to a three-wheeled golf trolley and back in an easy way. The mounting with the key feature provides an easy and stable way of connecting the support wheel.

In another preferred embodiment, the golf trolley comprises a break device, with a toothed wheel, rotationally coupled to the first wheel, second wheel and/or support wheel and a locking bolt, arranged to engage a recess in the toothed wheel and a spring, forcing the locking bolt in the direction of the toothed wheel. The brake device can prevent the golf trolley from rolling away unintendedly on a sloping terrain. A brake device with a locking bolt and toothed wheel is particularly reliable, since it does not rely on friction but comprises interlocking parts.

In a more preferred embodiment, the golf trolley further comprises a brake lever and a brake cable connecting the locking bolt with the brake lever, wherein the brake lever has a self-locked open position in which the locking bolt is prevented from engaging the toothed wheel and a self-locked closed position in which the locking bolt can engage a recess in the toothed wheel. The self-locking function can be provided by a rotatable brake lever that has its top dead-center between the open position and the closed position. Hence, a force is necessary to move the brake lever from the open position to the closed position or the other way round.

The inventive golf trolley can be manually driven by a user or comprise an electric motor arranged in the first wheel, the second wheel and/or the support wheel. The corresponding battery can be arranged in the respective wheel together with the motor or can be housed in the main frame. Such an electrically driven golf trolley is easier to maneuver, especially on large golf courts and for elderly people.

Additional advantages, features and possibilities of use of the present invention also result from the following description of exemplary embodiments and the drawing. Thereby, all described and/or figuratively shown features by themselves or in any combination make up the subject-matter of the present invention, even independent of their summary in the claims or their references.
- Fig. 1:: shows the inventive golf trolley in an operational mode;
- Fig. 2:: shows the inventive golf trolley in a transport mode, together with an attached golf bag;
- Fig. 3:: shows a schematic view of the telescopic rod of the golf trolley mounted to the main frame;
- Fig. 4:: shows the handle portion of the golf trolley;
- Fig. 5:: shows the main folding mechanism of the golf trolley;
- Fig. 6:: shows another view of the main folding mechanism of the golf trolley;
- Fig. 7: shows the support wheel mount of the golf trolley;
- Fig. 8:: shows the support wheel mount of fig. 7 mounted to the main frame;
- Fig. 9a to c:: show the mounting steps of the support wheel mount;
- Fig. 10:: shows the brake mechanism of the support wheel with the brake device;
- Fig. 11:: shows a detailed view of the brake device of the support wheel;
- Fig. 12:: shows the brake lever mechanism;
- Fig. 13:: shows another view of the brake lever mechanism;
- Fig. 14:: shows a third view of the brake lever mechanism;
- Fig. 15:: shows the elongated part of the main frame with the locking mechanism;
- Fig. 16a, b:: show detailed views of the locking mechanism;
- Fig. 17:: shows the wheel joint of the main wheel;
- Fig. 18a, b:: show an umbrella mount of the golf trolley.

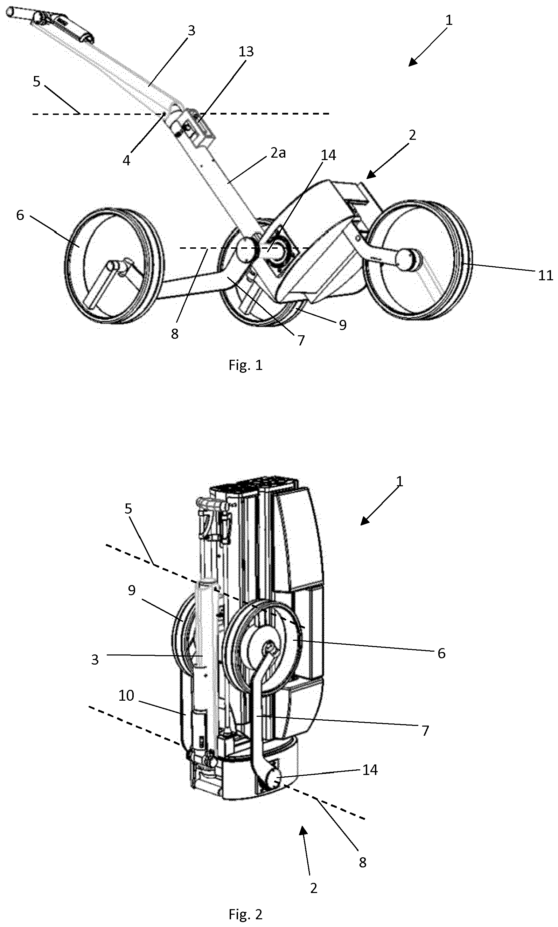

The inventive golf trolley 1, shown in figure 1 in its operational mode, comprises a main frame 2 with an elongated part 2a, to which a handle portion 3 is connected via a handle joint 4. The handle portion 3 is, therefore, foldable about a handle joint axis 5 at the handle joint 4. A golf bag mount 13 is arranged at the elongated part 2a of the main frame 2, to which a golf bag can be connected releasably.

The golf trolley 1 further comprises a first main wheel 6 connected to a first main wheel mount 7 which is in turn connected to the main frame 2. The golf trolley 1 further comprises a second main wheel 9 mounted to a second main wheel mount 10 which is in turn mounted to the main frame 2. The first main wheel mount 7 and second main wheel mount 10 are attached to the main frame 2 via a telescopic rod 14, such that the first main wheel mount 7 and the second main wheel mount 10 are rotatable about a swivel axis 8, which forms the center axis of the telescopic rod. In the operational mode shown in figure 1, the first main wheel mount and the second main wheel mount are in their extended angle. Additionally, the telescopic rod 14 can slide into and slide out of the main frame 2 and, therefore, the first main wheel mount 7 and second main wheel mount 10 can also move axially along the swivel axis 8. In the operational mode shown in figure 1, the first main wheel mount and the second main wheel mount are in their extended position.

The golf trolley 1 additionally comprises a support wheel 11 which is releasably mounted via a support wheel mount 12 to the main frame 2.

Figure 2 shows a transport mode of the inventive golf trolley 1. The first main wheel mount 7 and the second main wheel mount 10 are rotated into a transport angle, where the first main wheel mount 7 and the second main wheel mount 10 are basically parallel to the elongated part 2a of the main frame 2. Furthermore, the telescopic rod 14 is retracted into the main frame 2. Hence, the first main wheel mount 7 and the second main wheel mount 10 are close to the main frame 2. The handle portion 3 is folded along the handle joint axis 5 in its transport handle position. The support wheel 11 with its support wheel mount 12 is removed from the golf trolley 1 for transportation. The amount of space required for the golf trolley 1 is strongly reduced in the transport mode compared to the operational mode shown in figure 1.

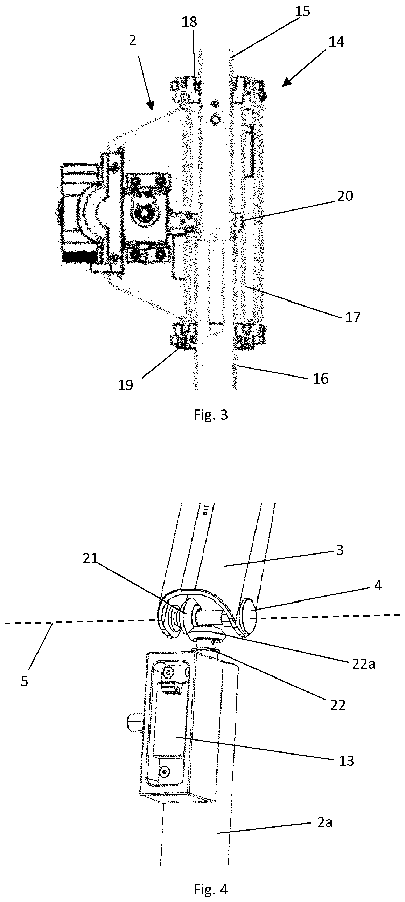

Figure 3 shows the telescopic rod 14 mounted to the main frame 2. The telescopic rod 14 comprises an inner tube 15 and an outer tube 16 and is mounted in a carrier tube 17. The carrier tube 17 is mounted to the main frame via two bearings 18, 19 arranged at its ends, an inner tube bearing 18 at its first end and an outer tube bearing 19 at its second end. The inner tube bearing 18 and the outer tube bearing 19 provide a rotatable mounting for the carrier tube 17 to the main frame 2. Furthermore, the inner tube 15 is slidably arranged inside of the inner tube bearing 18 such that the inner tube 15 can axially move inside the inner tube bearing 18 and relative to the carrier tube 17. The outer tube 16 is slidably arranged inside the outer tube bearing 19 such that the outer tube 16 can axially move inside the outer tube bearing 19 and relative to the carrier tube 17. Additionally, a support bearing 20 is arranged inside the carrier tube 17 and slidably engages an inner wall of the carrier tube 17. The support bearing 20 is further mounted to an end of the outer tube 16 and the inner tube 15 is slidably arranged inside the support bearing 20, such that the inner tube 15 can axially move with respect to the outer tube 16. Inner tube 15, outer tube 16 and carrier tube 17 are rotationally constrained to each other and can rotate together with respect to the main frame 2. The inner tube 15 and the outer tube 16 can slide into the carrier tube 17 and slide out of the carrier tube 17.

Figure 4 shows the elongated part 2a of the main frame 2 of the golf trolley 1 with the handle portion 3. The handle portion 3 is connected to the elongated part 2a of the main frame 2 via a handle joint 4 which comprises a bevel gear wheel 21 which is rotationally constrained to the handle portion 3. The bevel gear wheel 21 engages a corresponding bevel gear wheel 22a mounted on a shaft 22 which is arranged inside of the elongated part 2a of the main frame 2. When the handle portion 3 is moved at the handle joint 4, the bevel gear wheel 21 is rotating with respect to the main frame 2 and through its engagement with the bevel gear wheel 22a on the shaft 22, the shaft 22 is driven rotationally.

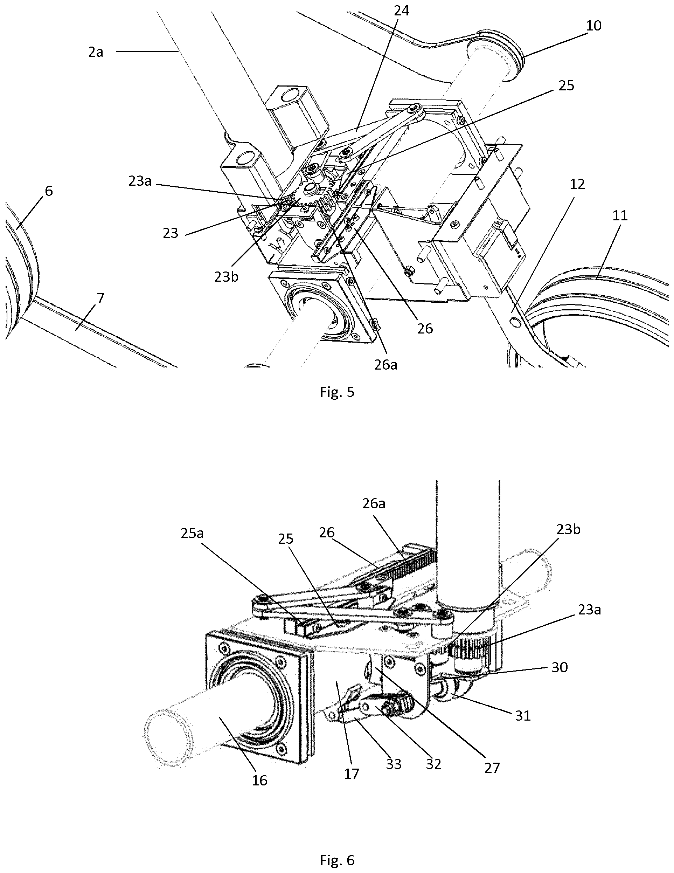

Figure 5 shows the main mechanism for driving the movement of the main wheel mounts 7, 10 with the main wheels 6, 9. The shaft 22, arranged inside the elongated part 2a of the main frame 2, extends from the handle portion 3 down to the main mechanism. At the end of the shaft 22, a spur gear 23 is arranged with a first toothed wheel 23a, connected to the shaft 22 and in engagement with a second toothed wheel 23b connected to a linear drive lever mechanism 24. Hence, the linear drive lever mechanism 24 is driven by the shaft 22 and thus by the movement of the handle portion 3.

The linear drive lever mechanism 24 comprises a first lever connected at one end to the second toothed wheel and with the other end to a mid-portion of a second lever. This second lever is rotationally connected to the main frame at one end and to a third lever at the other end. The third lever of the linear drive lever mechanism 24 is connected to a first linear drive carriage 25. The linear drive lever mechanism 24 thus transforms the rotational movement of the spur gear 23 to a linear movement. The first linear drive carriage 25 is thus moved linearly. The first linear drive carriage 25 comprises a gear rack 25a which is connected to a second linear drive carriage 26 with a corresponding gear rack 26a via a toothed wheel. Since the toothed wheel is rotationally mounted to the main frame 2, a linear movement of the first linear drive carriage 25 results in a linear movement of the second linear drive carriage 26 in the opposite direction.

As can be seen in figure 6, the first linear drive carriage 25 is connected to a sliding block guide 27. The sliding block guide 27 is in turn connected to an outer tube 16 of the telescopic rod 14. In the same way, the second linear drive carriage 26 is connected via a corresponding sliding block guide to the inner tube 15 of the telescopic rod 14. Through the connections via the sliding block guides 27, the axial movement of the linear drive carriages 25, 26 can be transmitted to the inner tube 15 and the outer tube 16 without rotationally constraining the inner tube 15 and the outer tube 16 to the sliding block guide 27. The sliding block guides 27 comprise grooves in which a protrusion or bolt connected to the inner tube 15 and/or the outer tube 16 can glide, when the telescopic rod 14 is rotated with respect to the main frame 2. The carrier tube 17 can have slots that act as a feed through for a protrusion or bolt connecting the inner tube and outer tube with the corresponding sliding block guides 27.

Additionally, the second toothed wheel 23b is further connected to a first bevel gear wheel 30 of the rotational drive which engages a second bevel gear wheel 31. The second bevel gear wheel 31 drives a rotational drive lever mechanism comprising a first rotational drive lever 32 and a second rotational drive lever 33. The first rotational drive lever 32 is connected and rotationally constrained to the second bevel gear wheel 31 at its first end and rotationally connected to the second rotational drive lever 33 at its second end. The second rotational drive lever 33 is in turn connected to the carrier tube 17 and thus to the telescopic rod 14. Therefore, the telescopic rod 14 is rotationally driven by the second toothed wheel 23b. When the telescopic rod 14 is rotated such that the main wheel mounts 7, 10 are in their extended angle, the first rotational drive lever 32 and the second rotational drive lever 33 are basically parallel to each other. Thus, no rotational force is transmitted from the telescopic rod 14 to the first rotational drive lever 32.

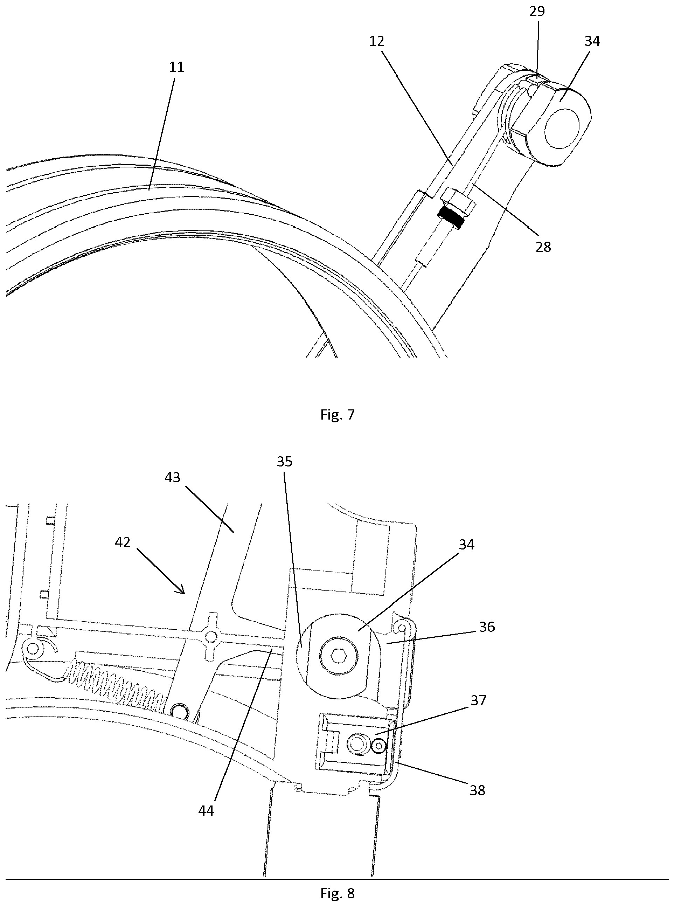

Figure 7 shows the support wheel 11 with the support wheel mount 12. The support wheel mount 12 comprises a key feature 34 for mounting the support wheel 11 to the main frame 2. The key feature 34 has a mainly cylindrical form with two flattened parts on opposite sides. The support wheel mount 12 further comprises a brake cable 28 for actuating a brake device 39. The brake cable 28 is mounted to a rotatable cable mount 29. Rotating the rotatable cable mount 29 applies a force to the brake cable 28.

Figure 8 shows the support wheel mount 12 mounted to the main frame 2. The key feature 34 is arranged inside a recess 35 of the main frame 2. The recess 35 comprises an opening 36 which is smaller than the recess 35. The main frame comprises a lock mechanism 37 that prevents the support wheel mount 12 from rotating about the key feature 34 axis. Pushing the lock mechanism 37 unlocks the support wheel mount 12 and allows rotating of the support wheel mount 12 about der key feature 34. A protective lid 38 covers the opening 36 and the recess 35.

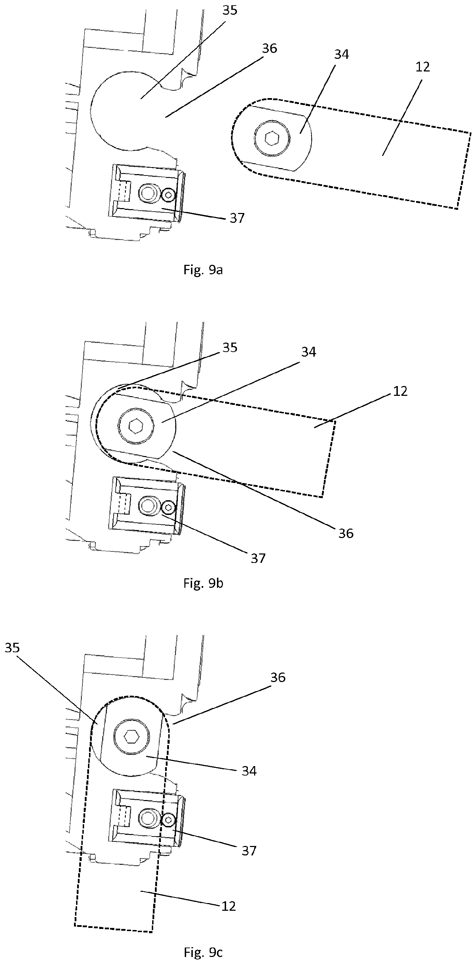

The mechanism for mounting the support wheel mount 12 to the main frame 2 is described in figures 9a to 9c by the several mounting steps. In figure 9a the support wheel mount 12 is separate from the main frame 2. It is arranged in an angle that aligns the key feature 34 of the support wheel mount 12 to the opening 36 of the recess 35 of the main frame 2.

As shown in figure 9b, the two flattened parts of the key feature 34 have a distance that corresponds to the size of the opening 36. Hence, with the angle of the key feature 34 aligned to the opening 36, the key feature 34 fits through the opening 36 and can, thus, be inserted into the recess 35.

After inserting the key feature 34 into the recess 35 through opening 36, the support wheel mount 12 is rotated about a key feature axis as shown in figure 9c. Therefore, the key feature turns inside the recess 31 and is no more aligned to the opening 36. Hence, the support wheel mount 12 with the key feature 34 cannot move out of the recess 35 but is held tight in the recess 35. Further, the support wheel mount 12 is prevented from rotating back, by the lock mechanism 37, which automatically engages the support wheel mount 12, when it is rotated in the locked position of the key feature 34.

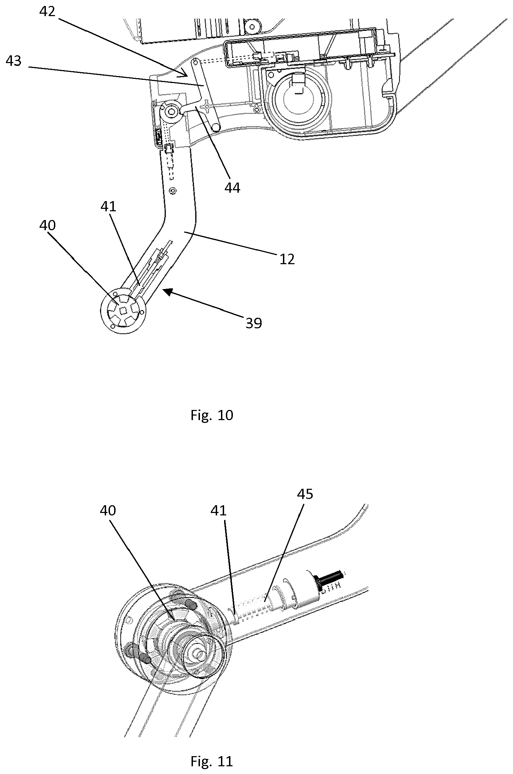

Figure 10 shows the support wheel mount 12 mounted to the main frame 2. The support wheel 11 is not shown . The support wheel mount 12 comprises a brake device 39 with a toothed wheel 40 and a locking bolt 41. The support wheel mount 12 is mounted inside the main frame 2 in the recess 35 with its key feature 34. The main frame 2 comprises a connection lever 42 for connecting a part of a brake cable 28 inside the main frame 2 with the rotatable cable mount 29 of the support wheel mount 12 and thus a part of the brake cable 28 of the support wheel mount 12. The connection lever 42 is rotatable about a connection lever axis and is spring loaded, as can be seen in figure 8. It comprises a first arm 43 which is connected to the brake cable 28 and a second arm 44 that interacts with the rotatable cable mount 29 of the support wheel mount 12. The second arm 44 abuts a protrusion of the rotatable cable mount 29. Applying a force to the brake cable 28 inside the main frame 2 rotates the connection lever 42. Thereby, the second arm 44 is moved with respect to the rotatable cable mount 29, which can thus rotate about its axis.

Figure 11 shows the brake device 39 in more detail with the toothed wheel 40 which is rotationally constrained to the support wheel 11. A locking bolt 41 is pushed towards the toothed wheel 40 with a locking bolt spring 41. Furthermore, the brake cable 28 is connected to the locking bolt 41 and pulling the locking bolt 41 against the tension of the locking bolt spring 45 out of engagement of the toothed wheel 36. When no force is applied to the break cable 28, the locking bolt spring 45 pushes the locking bolt 41 into a recess of the toothed wheel 36 and pulls the brake cable 28 thus rotating the rotatable cable mount 29. This prevents the toothed wheel and, thus, the support wheel 11 from turning. When the second arm 44 pushes against the rotatable cable mount 29, the rotatable cable mount 29 is rotating and thus applying a force to the brake cable 28. The brake cable thus pulls the locking bolt 37 out of its engagement with the toothed wheel 40. The support wheel 11 can thus rotate freely.

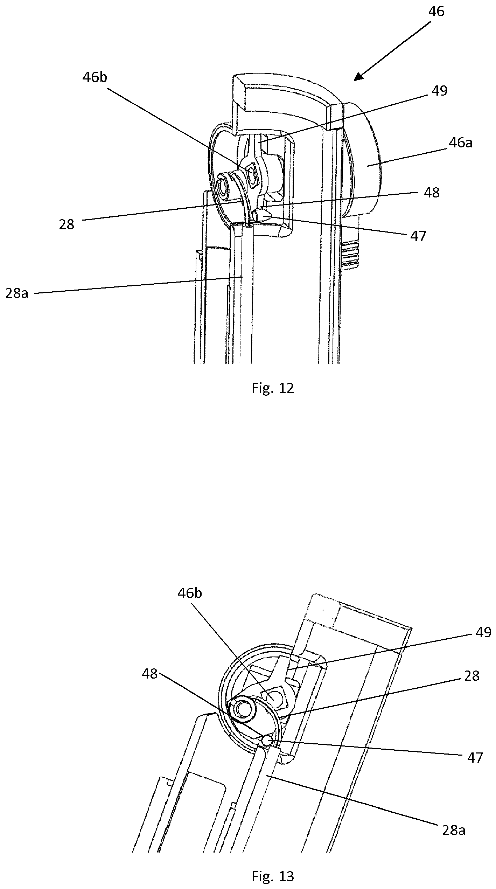

Figure 12 shows the brake lever 46 with an outer part 46a for interacting with the user and an inner part 46b that forms the connection to the brake cable 28. The brake cable 28 is connected to the connection lever 42 at its other end. The brake lever 46 can be rotated from a first position where a first abutting surface 48 contacts a stop feature 47 and a second position in which a second abutting surface 49 contacts the stop feature 47. The brake cable is guided inside a cable guide 28a.

Figure 13 shows the brake lever in the first position. The first abutting feature 48 contacts the stop feature 47 and the distance between a mounting point of the brake cable 28 on the brake lever 46b to and opening or end of the cable guide 28a is shorter than in a second position. The brake cable 28 is, thus, loose and no force is applied to the brake cable 28 by the brake lever 46. The spring loaded connection lever 42 can thus pull the brake cable 28 to rotate and apply a force to the rotatable cable mount 29.

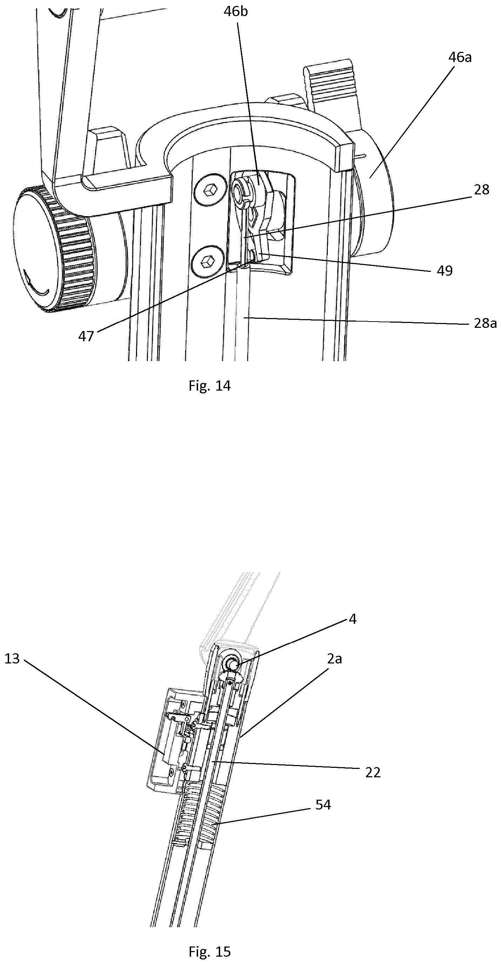

Figure 14 shows a second position of the brake lever 46. The second abutting surface 49 of the brake lever 46 is in contact with the stop feature 47. The mounting point of the brake cable 28 is at a larger distance from the end of the cable guide 28a and, thus, moving the brake lever 46 from the first position to the second position applies a force to the brake cable 28. This force rotates the connection lever 42 and moves the second arm away from the rotatable cable mount 29.

At an intermediate position between the first position and the second position of the break lever 46, the distance between the mounting point of the break cable 28 and an opening or end of the cable guide 28a is even larger than in the second position. Hence, since a force is applied to the brake cable 28 by the spring loaded connection lever 42, the brake lever 46 is self-retaining in the first position and in the second position.

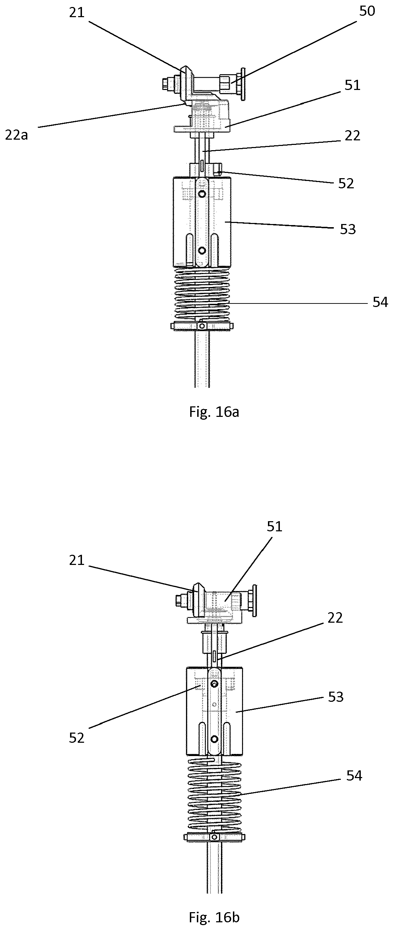

Figure 15 shows the elongated part 2a of the main frame 2 with the golf bag mount 13 and the shaft 22 turning in the interior of the main frame 2. Arranged inside the main frame 2 is a locking mechanism which is shown in more detail in figures 16a and 16b.

The locking mechanism comprises a first locking device 51 and a second locking device 53 which can be moved together axially between a locking-position and an open-position. The open-position is shown in figure 16a in which the first locking device 51 is arranged below a first locking feature 50 rotationally constrained to the bevel gear wheel 21. Thus, the bevel gear wheel 21 can rotate freely. The second locking device 53 is arranged below a second locking feature 52 which is mounted to and rotationally constrained to the shaft 22. Hence, the second locking feature 52 and the shaft 22 can rotate freely.

Figure 16b shows the locking mechanism of figure 16a in its locking-position. The first locking feature 50 is engaged with the first locking device 51 and the second locking feature 52 is engaged with the second locking device 53. Hence, neither the bevel gear wheel 21 nor the shaft 22 can rotate freely. A lock spring 54 forces the first locking device 51 and the second locking device 53 in its locking-position.

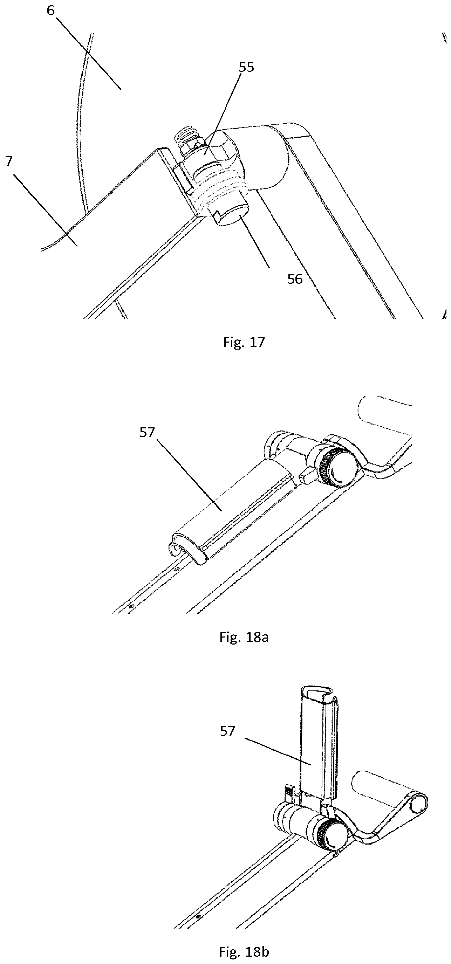

Figure 17 shows the mounting of the main wheels 6 to the main wheel mount 7. The main wheel 6 is mounted via a wheel joint 55 to the main wheel mount 7 and can thus be pivoted about an axis perpendicular to the wheels rotating axis. The main wheel 6 can be locked in a first position on a first side of the main wheel mount 7 and on a second side of the main wheel mount 7 in a second position. The wheel joint 55 comprises a wheel joint button 56 to release the locking mechanism of the wheel joint 55 and, thus, allows rotating the wheel 6 about the wheel joint 55.

Figures 18a, 18b show an umbrella mount which can be moved in a first position shown in figure 18a in which the umbrella mount is mainly parallel to the main frame 2, when it is not in use. In figure 18b the umbrella mount 57 is erected to an upright position, in which an umbrella can be fixed to the umbrella mount 57 for holding the umbrella.

### Reference numerals:

- 1: golf trolley
- 2: main frame
- 2a: elongated part
- 3: handle portion
- 4: handle joint
- 5: handle joint axis
- 6: first main wheel
- 7: first main wheel mount
- 8: swivel axis
- 9: second main wheel
- 10: second main wheel mount
- 11: support wheel
- 12: support wheel mount
- 13: golf bag mount
- 14: telescopic rod
- 15: inner tube
- 16: outer tube
- 17: carrier tube
- 18: bearing inner tube
- 19: bearing outer tube
- 20: support bearing
- 21: bevel gear wheel
- 22: shaft
- 22a: bevel gear wheel
- 23: spur gear
- 23a: first toothed wheel
- 23b: second toothed wheel
- 24: linear drive lever mechanism
- 25: first linear drive carriage
- 25a: gear rack
- 26: second linear drive carriage
- 26a: gear rack
- 27: sliding block guide
- 28: brake cable
- 28a: brake cable guide
- 29: rotatable cable mount
- 30: first bevel gear wheel
- 31: second bevel gear wheel
- 32: first rotational drive lever
- 33: second rotational drive lever
- 34: key feature
- 35: recess
- 36: opening
- 37: lock mechanism
- 38: protective lid
- 39: brake device
- 40: toothed wheel
- 41: locking bolt
- 42: connection lever
- 43: first arm
- 44: second arm
- 45: locking bolt spring
- 46: brake lever
- 46a: brake lever outer part
- 46b: brake lever inner part
- 47: stop feature
- 48: first abutting surface
- 49: second abutting surface
- 50: first locking feature
- 51: first locking device
- 52: second locking feature
- 53: second locking device
- 54: lock spring
- 55: wheel joint
- 56: wheel joint button
- 57: umbrella mount

## Claims

1. Golf trolley comprising
a main frame (2) for mounting a golf bag, a handle portion (3), which is pivotably attached to the main frame (2) at a handle joint (4),
a first main wheel (6) attached to a first main wheel mount (7), wherein the first main wheel mount (7) is pivotably attached to the main frame (2), pivotable about a swivel axis (8),
**characterized in that** the first main wheel mount (7) is displaceable parallel to the swivel axis (8),
wherein the handle portion (3) is mechanically coupled to the first main wheel mount (7) such that folding the handle portion (3) at the handle joint (4) drives the first main wheel mount (7) to rotate about the swivel axis (8) and to move linearly along the swivel axis (8).

2. Golf trolley according to claim 1, **characterized by** comprising a second main wheel (9) attached to a second main wheel mount (10), wherein the second main wheel mount (10) is pivotably attached to the main frame (2), pivotable about a swivel axis (8), displaceable parallel to the swivel axis (8) and mechanically coupled to the handle portion (3), such that folding the handle portion (3) at the handle joint drives the second main wheel mount (10) to rotate together with the first main wheel mount (7) and to move linearly along the swivel axis (8), wherein the first main wheel mount (7) and second main wheel mount (10) move in opposite directions.

3. Golf trolley according to claim 1 or 2, **characterized in that** the first main wheel mount (7) and/or the second main wheel mount (10) is attached to the main frame (2) via a telescopic rod (14), wherein the telescopic rod (14) can rotate about the swivel axis (8) and axially move along the swivel axis (8) relative to the main frame (2).

4. Golf trolley according to claim 3, **characterized in that** the telescopic rod (14) comprises an inner tube (15) and an outer tube (16), wherein the inner tube (15) is slidably arranged in the outer tube (16) and wherein the inner tube (15) is connected to a first main wheel mount (7) and the outer tube (16) is connected to the second main wheel mount (10).

5. Golf trolley according to claim 3 or 4, **characterized in that** the telescopic rod (14) is mechanically coupled to the handle portion (3) via a sliding block guide (27), wherein the telescopic rod (14) is rotational to the sliding block guide (27) about the swivel axis (8) and axially constrained to the sliding block guide (27).

6. Golf trolley according to claim 5, **characterized in that** a first sliding block guide (27) connected to the inner tube (15) and a second sliding block guide connected to the outer tube (16) are coupled via a toothed wheel between two gear racks (25a, 26a).

7. Golf trolley according to any of the claims 3 to 6, **characterized in that** the telescopic rod (14) is mechanically coupled to the handle portion (3) via a carrier element (17), wherein the telescopic rod (14) is rotationally constrained to the carrier element (17) about the swivel axis (8) and axially movable along the swivel axis (8) relative to the carrier element (17).

8. Golf trolley according to any of the preceding claims, **characterized in that** the handle portion (3) is mechanically coupled to the first main wheel mount (7) and/or the second main wheel mount (1'0) via a rotatable shaft (22).

9. Golf trolley according to claim 8, **characterized in that** the shaft (22) is coupled to the sliding block guide (27) by a linear drive lever mechanism (24), for transforming a rotation of the shaft (22) to a linear movement of the sliding block guide (27).

10. Golf trolley according to claim 8 or 9, **characterized in that** the shaft (22) is coupled to the carrier element (17) by a rotational drive lever mechanism (32, 33) with a first lever (32) and a second lever (33), wherein the first lever (2) and the second lever (3) are basically parallel, when the golf trolley (1) is in an operational mode.

11. Golf trolley according to any of the preceding claims, **characterized by** a movable locking device (50, 51, 52, 53) for engaging the handle portion (3) and/or the shaft (22) to prevent folding of the handle portion (3) and/or rotating of the shaft (22).

12. Golf trolley according to any of the preceding claims, **characterized in that** the first main wheel (6) and/or the second main wheel (9) is pivotably attached to the main wheel mount (7, 10) and comprises a first lock position on a first side of the main wheel mount (7, 10) and a second lock position on a second side of the main wheel mount (7, 10).

13. Golf trolley according to any of the preceding claims, **characterized by** comprising a support wheel (11), releasably mounted to the main frame (2) by a support wheel mount (12), wherein the support wheel mount (12) comprises a key feature (34) for engaging a recess (35) of the main frame (2) through an opening (36), wherein the key feature (34) fits through the opening (36) in a first orientation and does not fit through the opening (36) in a second orientation.

14. Golf trolley according to any of the preceding claims, **characterized in that** further comprising a break device (39), with a toothed wheel (40), rotationally coupled to the first main wheel (7), second main wheel (9) and/or support wheel (11) and a locking bolt (41), arranged to engage a recess in the toothed wheel (40) and a spring (45), forcing the locking bolt (41) towards the toothed wheel (40).

15. Golf trolley according to claim 14, **characterized in that** further comprising a brake lever (46) and a brake cable (28) connecting the locking bolt (41) with the brake lever (46), wherein the brake lever (46) has a self-locked open position in which the locking bolt (41) is prevented from engaging the toothed wheel (40) and a self-locked closed position in which the locking bolt (41) can engage the toothed wheel (40).
